# EUROPEAN PATENT SPECIFICATION

(11) **EP 4 353 392 B1**
(45) Date of publication and mention of the grant of the patent: **10.06.2026**
(21) Application number: 23203622.8
(22) Date of filing: 13.10.2023
(51) Int. Cl.: B23K 9/32, B33Y 30/00, B23K 9/04, B23K 9/08, H01R 13/22, H01R 39/64, H01R 41/00

(54) **SYSTEMS FOR LOCALIZED WORK RETURN PATH AND METHODS THEREOF**
SYSTEME FÜR LOKALISIERTEN ARBEITSRÜCKWEG UND VERFAHREN DAFÜR
SYSTÈMES POUR LE TRAJET DE RETOUR DE TRAVAIL LOCALISÉ ET PROCÉDÉ ASSOCIÉS

(30) Priority: 14.10.2022 US 202263379571 P
(43) Date of publication of application: 17.04.2024
(73) Proprietor: Relativity Space, Inc., Long Beach, CA 90807 (US)
(72) Inventor: REID, Michael, Long Beach, CA 90807 (US); GRUBER, Fritz, Long Beach, CA 90807 (US); KROL, Jeremy, Long Beach, CA 90807 (US)
(74) Representative: EIP

(56) References cited:
- WO-A1-2020/122855
- JP-A- 2000 271 747

## Description

### FIELD OF THE INVENTION

The present invention generally relates to work return paths in additive manufacturing systems.

### BACKGROUND OF THE INVENTION

Wire arc additive manufacturing (WAAM) is a production process used to 3D print and/or repair metal parts. WAAM is executed by depositing layers of metal on top of each other, until a desired 3D shape is created.

WAAM is the additive manufacturing branch of 3-dimensional printing using an arc. WAAM typically involves a printing head or printing head nozzle and an arc weld power source. The print head is movable and can contain a metal feed wire which can be moved relative to a substrate. The arc weld power source creates an arc that melts both the substrate and the feed wire, allowing them to fuse. As the print head moves, it leaves the weld pool to cool, causing the metal to turn from liquid to solid. This process can be repeated, such that the solidified metal becomes the substrate for further passes, to create a 3-dimensional shape.

The electricity that is used generate the arc and create the molten metal and weld pool needs to be returned to the arc weld power source via a work return path. The electrical properties of the work return path need to be maintained to ensure consistent weld processes.

A work return is sometimes called a ground return. A work return or ground return refers to the grounding path of the electricity used in the arc and differs from a general ground of the part to the earth for safety. In this disclosure, the terms "ground" or "grounding" refer to the work return or ground return or return path and not to an earth ground, unless specifically stated otherwise.

JP2000271747 describes a welding process involving connecting an earth cable to a roller which comes into contact with an end surface of material, where the roller is located at a constant distance from the welding torches.

WO2020122855 discloses an arc welding system and method for controlling arc position by modulating ground connections. A pair of ground connections are connected to the workpiece on opposing sides of the weld location and controlled to deflect the arc away from a closed ground connection, thereby improving weld quality and side wall fusion in narrow grooves.

### BRIEF SUMMARY OF THE INVENTION

Systems and methods in accordance with embodiments of the invention implement localized grounding systems for additive manufacturing. The invention is defined by the appended claims.

Some embodiment of the invention include a component for use in wire arc additive manufacturing (WAAM), comprising: means for maintaining a substantially continuous electrical connection with a printed surface of a part during a WAAM process; a first connector, electrically connected to the maintaining means, configured to receive a connection to a power source; and a second connector configured to attach the maintaining means to a printer head that, when in use during the WAAM process, is positioned above the part.

Some embodiments of the invention include a component for use in wire arc additive manufacturing (WAAM), comprising: an electrically conductive object configured to maintain a continuous electrical connection with a printed surface of a part during a WAAM process; a first connector, electrically connected to the electrically conductive object, configured to receive a connection to a power source; and a second connector configured to attach the electrically conductive object to a printer head that, when in use during the WAAM process, is positioned above the part.

In some embodiments, the first connector is configured to receive a part attached to a return path cable.

In some embodiments, the electrically conductive object comprises bristles.

In some embodiments, the electrically conductive object is configured to roll over the printed surface during the WAAM process.

In some embodiments, the electrically conductive object is configured to slide over the printed surface during the WAAM process.

Some embodiments further comprise a hinge configured to connect the electrically conductive object and the second connector.

In some embodiments, the hinge is spring loaded.

In some embodiments, the second connector is sufficiently flexible to allow the electrically conductive object to move over irregularities in the printed surface without substantially affecting movement of the printer head.

Some embodiments further comprise the printer head, wherein the second connector is configured to position the electrically conductive object behind a cooling edge of a weld pool on the printed surface.

Some embodiments further comprise the printer head, wherein the second connector is configured to position the electrically conductive object ahead of a melting edge of a weld pool on the printed surface.

Some embodiments further comprise a motorized element that moves the electrically conductive object in relation to the printer head.

In some embodiments, the electrically conductive object comprises an electrically conductive material selected from the group consisting of: a metal, a metal alloy, a composite, a fabric, carbon, and a combination thereof.

Some embodiments include a print system for wire arc additive manufacturing (WAAM), comprising: a printer head configured to deposit a molten material to form a part; and a component comprising: means for maintaining a substantially continuous electrical connection with a printed surface of the part during a WAAM process; a first connector, electrically connected to the maintaining means, configured to receive a connection to a power source; and a second connector configured to attach the maintaining means to the printer head that, when in use during the WAAM process, is positioned above the part.

In some embodiments, the first connector is configured to receive a part attached to a return path cable.

In some embodiments, the maintaining means comprises bristles.

In some embodiments, the maintaining means is configured to roll over the printed surface during the WAAM process.

In some embodiments, the maintaining means is configured to slide over the printed surface during the WAAM process.

In some embodiments, the component further comprises a hinge configured to connect the maintaining means and the second connector.

In some embodiments, the hinge is spring loaded.

In some embodiments, the second connector is sufficiently flexible to allow the maintaining means to move over irregularities in the printed surface without substantially affecting movement of the printer head.

In some embodiments, the second connector is configured to position the maintaining means behind a cooling edge of a weld pool on the printed surface.

In some embodiments, the second connector is configured to position the maintaining means ahead of a melting edge of a weld pool on the printed surface.

In some embodiments, the component further comprises a motorized element that moves the maintaining means in relation to the printer head.

In some embodiments, the maintaining means comprises an electrically conductive material selected from the group consisting of: a metal, a metal alloy, a composite, a fabric, carbon, and a combination thereof.

Some embodiments include a method for wire arc additive manufacturing (WAAM) comprising:
printing a part with a printer head, wherein the part comprises a printed surface, the printer head deposits a material to form the printed surface;
establishing a return path between the printed surface and a power source via a component; wherein the component comprises: an electrically conductive object configured to maintain a continuous electrical connection with the printed surface; a first connector, electrically connected to the electrically conductive object, configured to receive a connection to the power source; and a second connector configured to attach the electrically conductive object to the printer head that, when in use during a WAAM process, is positioned above the part; and
moving the component along the printed surface.

In some embodiments, the first connector is configured to receive a part attached to a return path cable.

In some embodiments, the electrically conductive object comprises bristles.

In some embodiments, the electrically conductive object is configured to roll over the printed surface during the WAAM process.

In some embodiments, the electrically conductive object is configured to slide over the printed surface during the WAAM process.

In some embodiments, the component further comprises a hinge configured to connect the electrically conductive object and the second connector.

In some embodiments, the hinge is spring loaded.

In some embodiments, the second connector is sufficiently flexible to allow the electrically conductive object to move over irregularities in the printed surface without substantially affecting movement of the printer head.

In some embodiments, the second connector is configured to position the electrically conductive object behind a cooling edge of a weld pool on the printed surface.

In some embodiments, the second connector is configured to position the electrically conductive object ahead of a melting edge of a weld pool on the printed surface.

In some embodiments, the component further comprises a motorized element that moves the electrically conductive object in relation to the printer head.

In some embodiments, the electrically conductive object comprises an electrically conductive material selected from the group consisting of: a metal, a metal alloy, a composite, a fabric, carbon, and a combination thereof.

In some embodiments, the printing is in a vertical orientation.

In some embodiments, the printing is in a horizontal orientation.

Additional embodiments and features are set forth in part in the description that follows, and in part will become apparent to those skilled in the art upon examination of the specification or may be learned by the practice of the disclosure. A further understanding of the nature and advantages of the present disclosure may be realized by reference to the remaining portions of the specification and the drawings, which forms a part of this disclosure.

### BRIEF DESCRIPTION OF THE DRAWINGS

The description will be more fully understood with reference to the following figures, which are presented as exemplary embodiments of the invention and should not be construed as a complete recitation of the scope of the invention, wherein:
Figure 1 illustrates a welding system with a work return cable.
Figure 2 illustrates positioning of a ground return in a WAAM system having a vertical print orientation.
Figure 3 illustrates positioning of a ground return in a WAAM system having a horizontal print orientation.
Figure 4A illustrates improved localized grounding in a WAAM system in a vertical print orientation in accordance with an embodiment.
Figure 4B illustrates improved localized grounding in a WAAM system in a horizontal print orientation in accordance with an embodiment.
Figure 5 illustrates a print head and a local connection component for localized grounding in accordance with an embodiment.
FIG. 6 illustrates a local connection component with a hinge in accordance with an embodiment.
Figure 7 illustrates a local connection component for localized grounding in accordance with an embodiment.

### DETAILED DESCRIPTION OF THE INVENTION

In the present description, dimensions given in feet correspond to 1 foot = 0.3048 meter.

Turning now to the drawings, systems and methods for localized grounding of additive manufacturing are described. The localized grounding can be used in various metal additive manufacturing processes including (but not limited to) powder-based additive manufacturing and wire-based additive manufacturing, including (but not limited to) wire arc additive manufacturing (WAAM), gas metal arc welding based WAAM, gas tungsten arc welding based WAAM, plasma arc welding based WAAM, single wire WAAM, double-wire WAAM, and higher-order-multiple-wire WAAM. During additive manufacturing, a work ground cable is connected to the substrate of the printed objects in order to complete the circuit to the arc power source. The inventors recognized that when printing objects of industrial scales (for example a dimension of at least 50 feet from the substrate), the work ground cable (also referred as grounding cable, ground cable, ground return cable, work return cable, and/or return cable) can get too long, which they recognized increases the inductance of the circuit and reduces the print consistency and accuracy. Many embodiments implement localized grounding to ground directly to the printed surface instead of to the substrate. Localized grounding in accordance with several embodiments can shorten the length of grounding and/or the return cables compared to the above-described substrate grounding.

In many embodiments, localized grounding implements local connection elements and/or components to enable direct grounding of the printed part and/or the printed surface. In several embodiments, the local connection elements can electrically connect the printed surface with the grounding/return cable to provide good electrical contact during the printing. The local connection elements can have flexible configurations and/or structures to ensure the connection between the printed surface and the ground following the print path while the part is stationary, rotating or translating. In certain embodiments, the local connection elements include at least one electrically conductive object to establish the electrical contact between the printed surface and the grounding/return path.

The localized grounding can be adapted to various additive manufacturing processes. In some embodiments, localized grounding can be used for vertical and/or horizontal print orientations. The localized grounding can be used in additive manufacturing systems and provide grounding functions for at least 6 hours of additive manufacturing time.

### Grounding in Wire Based Additive Manufacturing

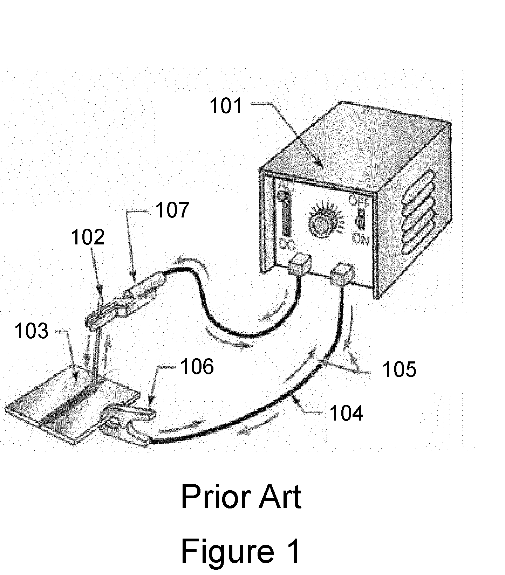

Printers and/or welders in wire arc-based additive manufacturing systems require the electricity that passes through the part to generate the arc to be returned to the power source. Figure 1 illustrates a welding system with a work return cable. In the welding system, a weld power source 101 provides power during the welding process. An electrode 102 depositing the weld material onto the work piece 103 can be held using an electrode holder 107. The electrode 102 can be connected with the power source 101 using a cable. A static clamp 106 can be used to connect the work piece 103 with the power source 101 using a work return cable 104. The work return cable 104 allows the current to flow back (or forward) from the work piece to the welder power supply. The flow of current 105 in the work return cable 104 can be in both directions from the power supply to the work piece. The work return cable 104 and the clamp 106 should have good electrical contact with the work piece 103. The work return cable should have the ability to conduct large currents.

Some WAAM systems print in vertical orientations. The substrates for the printed objects can be connected to ground/return path during printing. The substrates can be electrically conductive substrates including (but not limited to) metal plates and/or metal sheets, that provide support to the printed objects. The power sources for the welders normally have ground connections that can be used to return the current from the work piece to the power source. The inventors realized, however, that when the printed objects are for industrial applications, they can have large scales, such as at least one dimension of at least 50 feet. Ordinarily, such large-scale objects would need long grounding/return path cables that can connect the substrate and the printer. The inventors recognized that when the cable is too long, it can increase the inductance of the weld circuit, which can reduce the welder's capability of reacting to changes in the arc and may even lead to inability to weld.

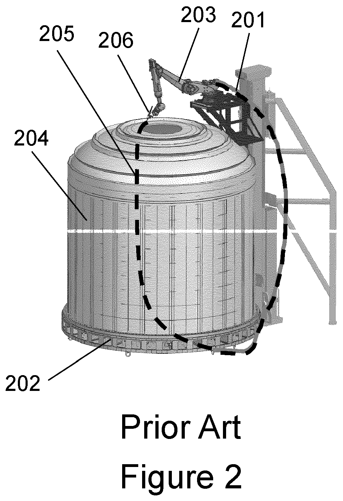

In WAAM systems, the printed objects are supported on a substrate. A clamp and a work return cable have been used to connect the substrate with the ground. Figure 2 illustrates a WAAM system in a vertical printing orientation with such a ground connection. A WAAM print robot 203 can print a part 204 vertically on a substrate 202. The substrate 202 supports the printed part 204. The ground/return path cable 201 (solid line) connects the substrate 202 of the printed part and the ground/return path connector. The ground/return path connector (not shown) can be part of the power source of the welder. The dashed line 205 shows the return path of the electrons (or current) from the printer 203 to the printed surface 206, through the metallic printed part 204 and the substrate 202, and through the return path cable 201, to the ground/return path connector on the power source. The print objects can have a height from about 1 foot to about 100 feet. When the object gets tall, the ground/return path cable may start to get too long such that the inductance of the circuit increases, which can result in reduced print qualities.

Vertical printing can have several limitations when printing speed and scale are needed for industrial applications. In order to adapt additive manufacturing processes to industrial scales, horizontal printing orientations for WAAM systems have been developed. (See, e.g., U.S. Patent Application No. 18/352,992, filed July 14, 2023.) Horizontal WAAM systems enable the flexibility to accommodate large scale objects. For example, horizontal printing does not require a tall construction site and removes constraints associated with the vertical print orientations.

The horizontal WAAM systems may allow large overall volumes of the print products. The horizontal WAAM systems can print objects with at least one dimension of at least 15 feet; of at least 16 feet; of at least 18 feet; of at least 20 feet; of at 25 feet; of at least 30 feet; of at least 35 feet. The horizontally printed objects can have at least one component with a shape of a rectangular, square, cylinder, circle, eclipse, dome, triangle, polygon, pentagon, hexagon, octagon, cube, sphere, hemisphere, cone, pyramid, and any combinations thereof. The horizontal WAAM systems can operate with an operating volume equivalent to a cylinder of a diameter of at least 50 inches; of at least 55 inches; of at least 1 foot; of at least 5 feet; of at least 10 feet; of at least 15 feet; of at least 20 feet; of at least 25 feet. The cylinder can have a length of at least 50 feet; of at least 100 feet; of at least 150 feet; of at least 200 feet; of at least 250 feet; of at least 300 feet. Although the example above provides example dimensions, it should be understood that the invention is not limited to printed parts of a particular size. Rather, the invention can be useful when printing objects having these dimensions, as discussed in this written description, and has utility when printing objects of any size.

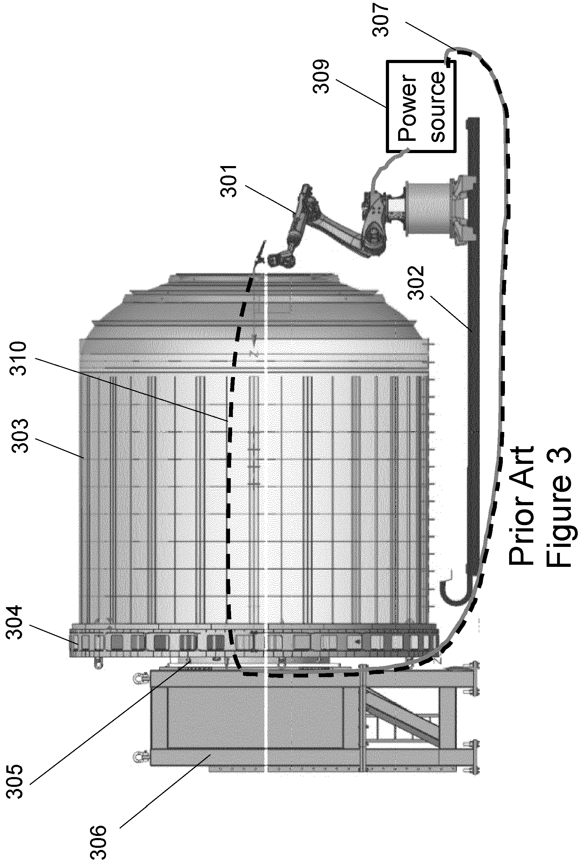

Figure 3 illustrates a horizontal WAAM print cell with a ground return. A WAAM 3D print robot 301 can be controlled on a fixed rail 302. The horizontally printed part 303 can be supported on a build plate 304. The printed part can have a cylindrical body and a dome top. The build plate can be held with a positioner 305. The positioner and the build plate can be raised by the riser 306. The build plate 304 can be the substrate for the print object 303. The positioner 305 is a support structure in the back of the build plate 304. The positioner can be made of steel or other metals and/or metal alloys. The ground cable 307 (solid line) can connect the positioner 306 and/or the build plate 304 to the power source 309 during the print processes. The power source can have a ground connection to direct the electron flow from the printed part. The electrons (or current) flowing from the printer 301 to the printed part 303 have to go through the build plate 304 and/or the positioner 305, and the ground cable 307, to return to the power source and complete the circuit of the arc power source. The return path of electron (current) flow is illustrated in dashed line 310. Although the example above provides a printed part of a cylindrical body and a dome top, it should be understood that the invention is not limited to a shape of cylindrical body with a dome top and is applicable when printing parts of any shape, including parts that do not have cylindrical body and/or a dome top. Although the example above provides a printed part supported on a build plate, a positioner, and a riser, it should be understood that the invention is not limited to a support structure for a printed part and is applicable when the printed part is supported on any shape and/or structure of a substrate, including parts that are not supported on a build plate or a positioner or a riser.

Printing in horizontal orientations allows the print objects to have a length much greater than printing in the vertical orientations. In some embodiments, the printed objects in horizontal orientations can have a length of at least 50 feet. If the grounding cable were configured as in the example of Figure 2 when printing an object at least 50 feet long in a horizontal orientation, the grounding cable for the welder that connects the positioner can be at least 60 feet in length. The inventors realized that when the cable is at least 60 feet long, it can increase the return path and thus the inductance of the weld circuit. They appreciated that the increased inductance can reduce the capability of the welder to react to changes in the arc and may even lead to inability to weld. Again, although the example above provides an example of 50 feet, the invention is not limited to a size of greater than or equal to 50 feet and is applicable when printing parts of any size, including parts having no dimension greater than or equal to 50 feet.

### Localized Grounding

Many embodiments implement localized grounding for wire arc -based additive manufacturing systems. Localized grounding in accordance with several embodiments can shorten the length of the grounding cable and improve the print quality. In some embodiments, localized grounding can be used for vertical and/or horizontal print orientations. In various embodiments, localized grounding can directly connect the ground connections to the printed surface, instead of the substrate. The inventors recognized that direct connection to the printed surface in accordance with several embodiments can keep the grounding length short, therefore keeping print qualities consistent.

To enable localized grounding, many embodiments ground the printed surface directly. Localized grounding may not need long cables to connect the substrate (or the positioner) when printing large scale objects. Embodiments include the inventive realization that, because the printed surface is connected with the substrate, connecting the power source to the printed surface can have the same or substantially the same electrical effect as connecting the power source to the substrate, for printed metal parts. Grounding to the printed surface directly can shorten the length of the ground cable compared to grounding to the substrate.

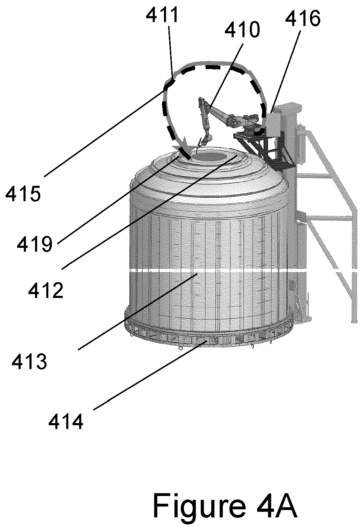

Figure 4A illustrates a vertical WAAM print cell with localized grounding in accordance with an embodiment of the invention. A WAAM print robot 410 can print a part 413 vertically on a substrate 414. The substrate 414 can support the printed part 413. The ground (work return) cable 415 (solid line) connects the printed surface 412 via a connector 419 to the weld power source 416. The ground/return path 411 (dashed line) allows current flow from the printed surface 412 to the power source 416. The ground cable 415 can establish a local connection with the printed surface 412 and provide an electrical pathway for current to flow from the printed surface 412 and return to the printer 410 during the print processes. The grounding path 411 is from the printed surface 412 to the power source 416. Compared to the grounding path for vertical orientation printing shown in Figure 2, the localized grounding path in Figure 4A does not include the substrate, and the shortened localized grounding path reduces variability across the length of the part as the part grows.

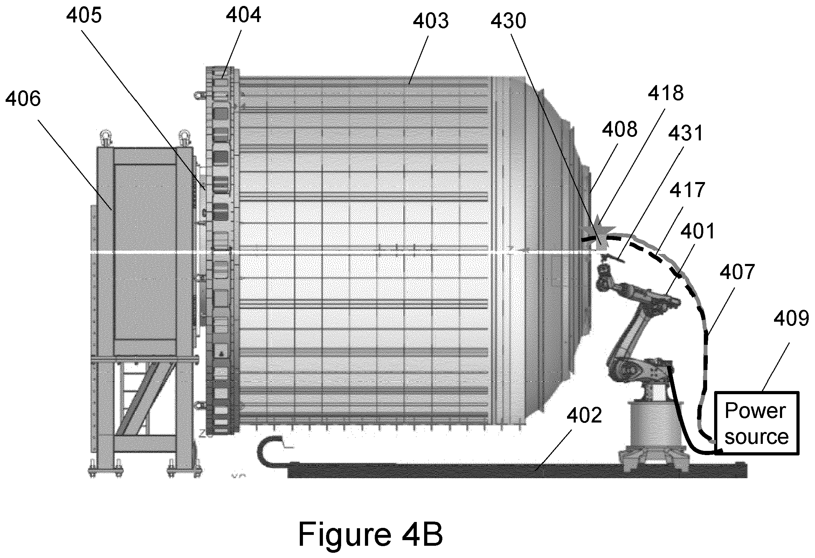

Figure 4B illustrates a horizontal WAAM print cell with localized grounding in accordance with an embodiment of the invention. A WAAM print robot 401 can be controlled on a fixed rail 402. The horizontally printed part 403 can be supported on a build plate 404. The build plate can be held with a positioner 405. The positioner and the build plate can be raised by the riser 406. The build plate 404 can be the substrate for the print object 403. The positioner 405 is a support structure in the back of the build plate 404. The positioner can be made of steel or other metals and/or metal alloys. The ground cable 407 (solid line) can connect the printed surface 408 to the weld power supply 409 during the print processes via a first connector418. The grounding path 417 (dashed line) is from the printed surface 408 to the weld power supply 409. Compared to the return path shown in Figure 3, the localized grounding shown in Figure 4B can substantially shorten the grounding path.

Several embodiments implement a local connection element 418 to enable direct electrical connection of the printed part and/or the printed surface. The local connection element can be connected to the print head 431 via a second connector 430.

The local connection elements 418 in accordance with some embodiments electrically connects the printed surface with the grounding/return path cable via the second connector 430. In many embodiments, the local connection elements can ensure good electrical contact between the ground and the printed part (namely, the printed surface) such that it maintains the connection during printing. In a number of embodiments, a local connection element acts as a moving ground connection on the printed surface and follows the print path. In many embodiments, the local connection elements can follow the print head and track the print path instead of being a static connection such as clamping. In this regard, certain embodiments include electrically conductive elements for maintaining a substantially continuous electrical connection with a printed surface of a 3D part during a print process, such as a WAAM process.

Suitable structures for local connection elements and for maintaining a substantially continuous electrical connection with a printed surface of a 3D part during a WAAM process include an electrically conductive object that is substantially constantly in contact with the printed surface of the part during a print process but does not impede movement of the printer head in relation to the printed surface. The electrically conductive object can be made of any electrically conductive material(s) including, but not limited to: metals, such as copper and aluminum; metal alloys, such as steel; conductive ceramics; conductive polymers; conductive fabrics; conductive composites; conductive carbon materials; and any combinations thereof. In certain embodiments, the object can have flexible structures to maintain electrical contact with the printed part. To establish and maintain electrical contact with the printed surface, the electrically conductive object can have conductive structures with high surface area that maintain connection with the printed surface despite irregularities the object encounters as it moves across the printed surface (or the printed surface moves under object). Examples of such conductive structures include, but are not limited to, bristles, bristles on a roller, a roller, wool/matted material, fabrics, sponges, and whisks, such as steel wool or a copper-type flexible conductor. It should be understood that a metal wool or fabric, if implemented, should be selected to be sufficiently coarse to avoid igniting when moved over the surface. The conductive structure, in some embodiments, can be rolled over the printed surface. In some embodiments, the conductive structure can slide, or drag, over the printed surface without use of a roller.

In several embodiments, the local connection elements can optionally include springs or spring-loaded hinges to promote electrical contact between the ground and the printed surface. In such embodiments the springs or spring-loaded hinges are desirably configured to provide sufficient pressure to maintain a good contact between a local connection element and the printed part and allow localized grounding to follow the shape of the part during printing yet provide sufficient flexibility to allow the local connection element to move over irregularities in the printed surface without compromising the printing head's operation.

As noted above, the local connection elements can include a second connector 430 configured to attach the maintaining means to a printer head that, when in use during the WAAM process, is positioned above the 3D part. In some embodiments, the second connector can be constructed so that the material and/or thickness is selected to provide resilient flexibility. Advantageously, the second connector 430 can be sufficiently flexible to allow the local connection element 418 connected to the second connector 430 to move up and down over irregularities in the underlying printed surface; yet, the second connector 430 can be stiff enough to provide sufficient pressure to maintain a good contact between a local connection element or maintaining means and the printed part.

In a number of embodiments, the printed surface and/or the print path may not be straight, yet the localized grounding can maintain a good electrical contact between the printed part and the ground due to the local connection element as it follows the shape of the part. In many embodiments, the local connection element can passively follow or passively lead the print head based on the shape of the second connector 430, which is selected to allow the local connection element to track the shape of the part. The following or leading can be actively maintained by pathing software communicating with a motorized device, such as a robot.

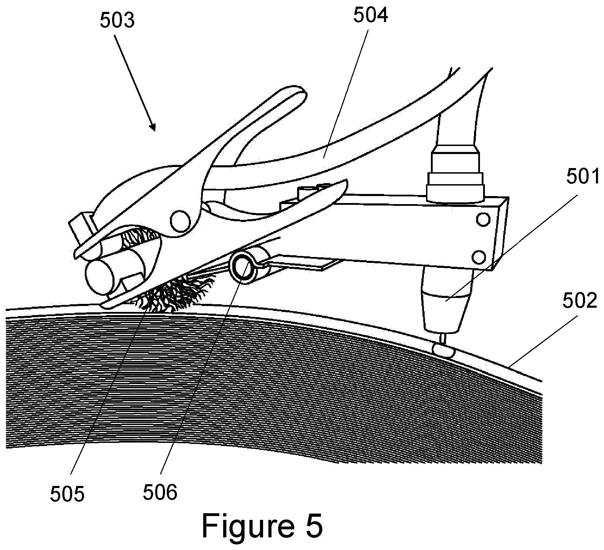

Figure 5 illustrates a local connection element for localized grounding for the 3D printing systems in accordance with an embodiment of the invention. The printer head 501 deposits the molten material on to a substrate to form the printed object 502. The printed object 502 has a curved structure. The local connection element 503 is in contact with the printed surface 502 and the ground cable 504. An electrically conductive object such as (but not limited to) metal bristles on a roller 505 as part of the local connection element establishes the electrical contact between the printed surface 502 and the ground 504. A spring-loaded hinge 506 generates pressure to ensure and maintain the electric contact when there are changes in the print path.

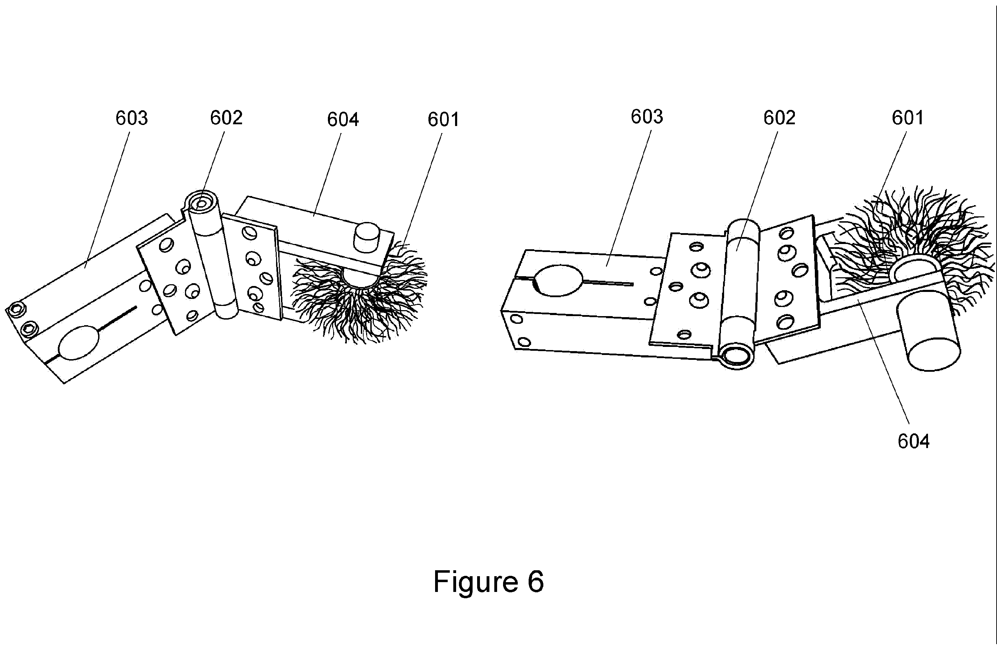

FIG. 6 illustrates a local connection element with a hinge in accordance with an embodiment of the invention. In FIG. 6, the local connection element includes an electrically conductive object such as a bristle 601, a hinge 602, a first connector 604, and a second connector 603. When in use during WAAM printing processes, the electrically conductive bristle 601 is in contact with the first connector 604. The first connector 604 can be connected with a return path cable using an attachment including (but not limited to) a clamp. The bristle 601 is in contact with the printed surface such that the printed surface, the bristle 601, the first connector 604, and the return path cable are electrically connected. The hinge 602 can provide sufficient pressure to maintain a good contact between the bristle 601 and the printed surface. In some embodiments, the hinge can be loaded with a spring. The second connector 603 can be attached to the bristle 601, the first connector 604, and the hinge 602. The second connector 603 can also be attached to a printer head such that the local connection element can move along the print path and follow the printed surface whether it is flat or irregular. In various embodiments, the hinge 602 can be replaced with a flexible connector to ensure the electrical contact between the bristle and the printed surface. The flexible connector can be of any of a suitable shape such as (but not limited to) rods, tubes, strings, plates, and can be made of any suitable materials such as (but not limited to) metals, metal alloys, ceramics, polymers, rubbers, plastics, fibers, fabrics, composites, and any combinations thereof.

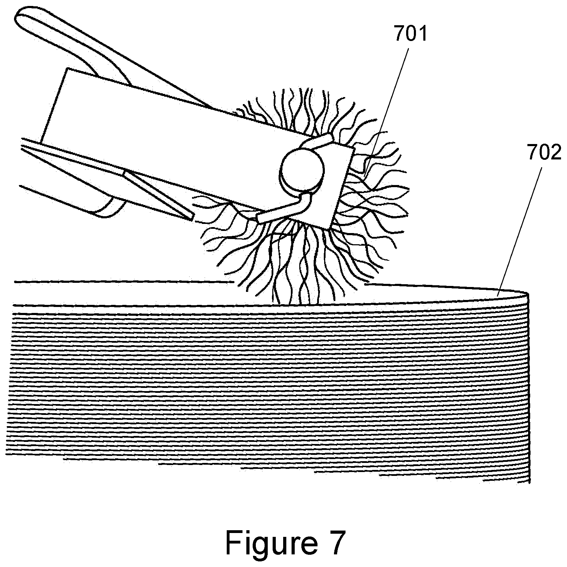

Figure 7 illustrates electrically conductive bristles in contact with the printed surface of a 3D printed structure in accordance with an embodiment. The electrically conductive bristles 701 have a flexible structure with a high surface area, which ensure a good electrical connection between the bristles 701 and the printed surface 702. The localized grounding can be adapted to various 3D printing processes. It offers good electrical contact for grounding and shortens the length of the ground cable compared to other methods for grounding, such as connecting to the substrate. The localized grounding can be used in a 3D printing system for substantially continuous printing lasting at least 6 hours.

### DOCTRINE OF EQUIVALENTS

As can be inferred from the above discussion, the above-mentioned concepts can be implemented in a variety of arrangements in accordance with embodiments of the invention. Accordingly, although the present invention has been described in certain specific aspects, many additional modifications and variations would be apparent to those skilled in the art. It is therefore to be understood that the present invention may be practiced otherwise than specifically described. For example, although certain structure heights/lengths are described, such structure dimensions are not required to practice the invention. For example, although additive manufacturing can be used to print structure having a diameter of at least 50 feet, that dimension is not required to practice the invention. Thus, embodiments of the present invention should be considered in all respects as illustrative and not restrictive.

As used herein, the singular terms "a," "an," and "the" may include plural referents unless the context clearly dictates otherwise. Reference to an object in the singular is not intended to mean "one and only one" unless explicitly so stated, but rather "one or more."

As used herein, the terms "approximately," "substantially," and "about" are used to describe and account for small variations. When used in conjunction with an event or circumstance, the terms can refer to instances in which the event or circumstance occurs precisely as well as instances in which the event or circumstance occurs to a close approximation. When used in conjunction with a numerical value, the terms can refer to a range of variation of less than or equal to ± 10% of that numerical value, such as less than or equal to ±5%, less than or equal to ±4%, less than or equal to ±3%, less than or equal to ±2%, less than or equal to ±1 %, less than or equal to ±0.5%, less than or equal to ±0.1 %, or less than or equal to ±0.05%.

Additionally, amounts, ratios, and other numerical values may sometimes be presented herein in a range format. It is to be understood that such range format is used for convenience and brevity and should be understood flexibly to include numerical values explicitly specified as limits of a range, but also to include all individual numerical values or sub-ranges encompassed within that range as if each numerical value and sub-range is explicitly specified. For example, a ratio in the range of about 1 to about 200 should be understood to include the explicitly recited limits of about 1 and about 200, but also to include individual ratios such as about 2, about 3, and about 4, and sub-ranges such as about 10 to about 50, about 20 to about 100, and so forth.

## Claims

1. A component (503) for use in wire arc additive manufacturing (WAAM), comprising:
an electrically conductive object (601+604) configured to track a print path and maintain a continuous electrical connection through a substantially constant contact with a printed surface (412, 408, 502, 702) of a printed part (413, 403) when in use during a WAAM process, the printed surface moving relative to the electrically conductive object (601+604);
a first connector (418), electrically connected to the electrically conductive object (601₊604) configured to receive an electrical connection to a power source (416, 409); and
a second connector (430, 603) configured to attach the electrically conductive object (601₊604) to a printer head (431, 501) that, when in use during the WAAM process, deposits a material to form the printed surface.

2. The component of claim 1, wherein the first connector is configured to receive a part attached to a return path cable (415, 407, 504).

3. The component of claim 1 or 2, wherein the electrically conductive object (601₊604) comprises bristles (601, 701).

4. The component of any preceding claim, wherein the electrically conductive object is configured to roll over the printed surface during the WAAM process;
or wherein the electrically conductive object is configured to slide over the printed surface during the WAAM process.

5. The component of any preceding claim, further comprising a hinge (506, 602) configured to connect the electrically conductive object and the second connector; wherein the hinge is spring loaded.

6. The component of any preceding claim, wherein the second connector is flexible to allow the electrically conductive object to move over irregularities in the printed surface.

7. The component of any preceding claim, further comprising a motorized element that moves the electrically conductive object in relation to the printer head.

8. The component of any preceding claim, wherein the electrically conductive object comprises an electrically conductive material selected from the group consisting of: a metal, a metal alloy, a composite, a fabric, carbon, and a combination thereof.

9. A system for wire arc additive manufacturing (WAAM), comprising:
a printer head (431, 501) configured to deposit a molten material to form a part (413, 403); and
the component (503) of any preceding claim, wherein the second connector (430, 603) is configured to position the electrically conductive object (503) behind a cooling edge of a weld pool on the printed surface or wherein the second connector is configured to position the electrically conductive object ahead of a melting edge of a weld pool on the printed surface.

10. A method for wire arc additive manufacturing (WAAM) comprising:
printing a part (413, 403) with a printer head (431, 501);
establishing a return path between a printed surface (412, 408, 502, 702) of the printed part and a power source (416, 409) via a component (503); wherein the component comprises:
an electrically conductive object (601₊604) configured to maintain a continuous electrical connection through a substantially constant contact with the printed surface, the printed surface moving relative to the electrically conductive object (601₊604);
a first connector (418), electrically connected to the electrically conductive object, configured to receive an electrical connection to the power source; and
a second connector (430, 603) configured to attach the electrically conductive object to the printer head that, when in use during a WAAM process, deposits a material to form the printed surface; and moving the component along the printed surface.

11. The method of claim 10, wherein the first connector is configured to receive a part attached to a return path cable (415, 407, 504).

12. The method of claim 10 or 11, wherein the electrically conductive object is configured to roll over the printed surface during the WAAM process;
or wherein the electrically conductive object is configured to slide over the printed surface during the WAAM process.

13. The method of any of claims 10 to 12, wherein the component further comprises a hinge (506, 602) configured to connect the electrically conductive object and the second connector;
or wherein the component further comprises a motorized element that moves the electrically conductive object in relation to the printer head.

14. The method of any of claims 10 to 13, wherein the second connector is flexible to allow the electrically conductive object to move over irregularities in the printed surface;
or wherein the second connector is configured to position the electrically conductive object behind a cooling edge of a weld pool on the printed surface;
or wherein the second connector is configured to position the electrically conductive object ahead of a melting edge of a weld pool on the printed surface.

15. The method of any of claims 10 to 14, wherein the printing is in a vertical orientation; or wherein the printing is in a horizontal orientation.

## Patentansprüche

1. Bauteil (503) zur Verwendung bei additiver Fertigung mit Drahtlichtbogen (WAAM), umfassend:
ein elektrisch leitfähiges Objekt (601 + 604), das konfiguriert ist, um einen Druckpfad zu verfolgen und eine kontinuierliche elektrische Verbindung durch einen im Wesentlichen konstanten Kontakt mit einer gedruckten Oberfläche (412, 408, 502, 702) eines gedruckten Werkstücks (413, 403) aufrechtzuerhalten, wenn es während eines WAAM-Prozesses in Verwendung ist, wobei sich die gedruckte Oberfläche relativ zu dem elektrisch leitfähigen Objekt (601 + 604) bewegt;
einen ersten Verbinder (418), der mit dem elektrisch leitfähigen Objekt (601 + 604) elektrisch verbunden ist, der konfiguriert ist, um eine elektrische Verbindung zu einer Leistungsquelle (416, 409) aufzunehmen; und
einen zweiten Verbinder (430, 603), der konfiguriert ist, um das elektrisch leitfähige Objekt (601 + 604) an einem Druckkopf (431, 501) anzubringen, der, wenn er während des WAAM-Prozesses in Verwendung ist, ein Material abscheidet, um die gedruckte Oberfläche auszubilden.

2. Bauteil nach Anspruch 1, wobei der erste Verbinder konfiguriert ist, um ein an ein Rückleitungskabel (415, 407, 504) angebrachtes Werkstück aufzunehmen.

3. Bauteil nach Anspruch 1 oder 2, wobei das elektrisch leitfähige Objekt (601 + 604) Borsten (601, 701) umfasst.

4. Bauteil nach einem der vorstehenden Ansprüche, wobei das elektrisch leitfähige Objekt konfiguriert ist, um während des WAAM-Prozesses über die gedruckte Oberfläche zu rollen;
oder wobei das elektrisch leitfähige Objekt konfiguriert ist, um während des WAAM-Prozesses über die gedruckte Oberfläche zu gleiten.

5. Bauteil nach einem der vorstehenden Ansprüche, ferner umfassend ein Scharnier (506, 602), das konfiguriert ist, um das elektrisch leitfähige Objekt und den zweiten Verbinder zu verbinden; wobei das Scharnier federbelastet ist.

6. Bauteil nach einem der vorstehenden Ansprüche, wobei der zweite Verbinder flexibel ist, um dem elektrisch leitfähigen Objekt zu ermöglichen, sich über Unregelmäßigkeiten in der gedruckten Oberfläche zu bewegen.

7. Bauteil nach einem der vorstehenden Ansprüche, ferner umfassend ein motorisiertes Element, das das elektrisch leitfähige Objekt in Bezug auf den Druckkopf bewegt.

8. Bauteil nach einem der vorstehenden Ansprüche, wobei das elektrisch leitfähige Objekt ein elektrisch leitfähiges Material umfasst, das aus der Gruppe ausgewählt ist, bestehend aus: einem Metall, einer Metalllegierung, einem Verbundwerkstoff, einem Gewebe, Kohlenstoff und einer Kombination davon.

9. System für additive Fertigung mit Drahtlichtbogen (WAAM), umfassend:
einen Druckkopf (431, 501), der konfiguriert ist, um ein geschmolzenes Material abzuscheiden, um ein Werkstück (413, 403) auszubilden; und
das Bauteil (503) nach einem der vorstehenden Ansprüche, wobei der zweite Verbinder (430, 603) konfiguriert ist, um das elektrisch leitfähige Objekt (503) hinter einer Kühlkante eines Schweißbads auf der gedruckten Oberfläche zu positionieren oder wobei der zweite Verbinder konfiguriert ist, um das elektrisch leitfähige Objekt vor einer Schmelzkante eines Schweißbads auf der gedruckten Oberfläche zu positionieren.

10. Verfahren für additive Fertigung mit Drahtlichtbogen (WAAM), umfassend:
Drucken eines Werkstücks (413, 403) mit einem Druckkopf (431, 501);
Herstellen einer Rückleitung zwischen einer gedruckten Oberfläche (412, 408, 502, 702) des gedruckten Werkstücks und einer Leistungsquelle (416, 409) über ein Bauteil (503);
wobei das Bauteil umfasst:
ein elektrisch leitfähiges Objekt (601 + 604), das konfiguriert ist, um eine kontinuierliche elektrische Verbindung durch einen im Wesentlichen konstanten Kontakt mit der gedruckten Oberfläche aufrechtzuerhalten, wobei sich die gedruckte Oberfläche relativ zu dem elektrisch leitfähigen Objekt (601 + 604) bewegt;
einen ersten Verbinder (418), der mit dem elektrisch leitfähigen Objekt elektrisch verbunden ist und konfiguriert ist, um eine elektrische Verbindung zu der Leistungsquelle aufzunehmen; und
einen zweiten Verbinder (430, 603), der konfiguriert ist, um das elektrisch leitfähige Objekt an dem Druckkopf anzubringen, der, wenn er während eines WAAM-Prozesses in Verwendung ist, ein Material abscheidet, um die gedruckte Oberfläche auszubilden; und Bewegen des Bauteils entlang der gedruckten Oberfläche.

11. Verfahren nach Anspruch 10, wobei der erste Verbinder konfiguriert ist, um ein an einem Rückleitungskabel (415, 407, 504) angebrachtes Werkstück aufzunehmen.

12. Verfahren nach Anspruch 10 oder 11, wobei das elektrisch leitfähige Objekt konfiguriert ist, um während des WAAM-Prozesses über die gedruckte Oberfläche zu rollen;
oder wobei das elektrisch leitfähige Objekt konfiguriert ist, um während des WAAM-Prozesses über die gedruckte Oberfläche zu gleiten.

13. Verfahren nach einem der Ansprüche 10 bis 12, wobei das Bauteil ferner ein Scharnier (506, 602) umfasst, das konfiguriert ist, um das elektrisch leitfähige Objekt und den zweiten Verbinder zu verbinden;
oder wobei das Bauteil ferner ein motorisiertes Element umfasst, das das elektrisch leitfähige Objekt in Bezug auf den Druckkopf bewegt.

14. Verfahren nach einem der Ansprüche 10 bis 13, wobei der zweite Verbinder flexibel ist, um dem elektrisch leitfähigen Objekt zu ermöglichen, sich über Unregelmäßigkeiten in der gedruckten Oberfläche zu bewegen;
oder wobei der zweite Verbinder konfiguriert ist, um das elektrisch leitfähige Objekt hinter einer Kühlkante eines Schweißbads auf der gedruckten Oberfläche zu positionieren;
oder wobei der zweite Verbinder konfiguriert ist, um das elektrisch leitfähige Objekt vor einer Schmelzkante eines Schweißbads auf der gedruckten Oberfläche zu positionieren.

15. Verfahren nach einem der Ansprüche 10 bis 14, wobei das Drucken in einer vertikalen Ausrichtung erfolgt; oder wobei das Drucken in einer horizontalen Ausrichtung erfolgt.

## Revendications

1. Composant (503) destiné à être utilisé dans la fabrication additive par arc-fil (WAAM), comprenant :
un objet électriquement conducteur (601+604) configuré pour suivre une trajectoire d'impression et maintenir une connexion électrique continue par le biais d'un contact sensiblement constant avec une surface imprimée (412, 408, 502, 702) d'une partie imprimée (413, 403) lorsqu'elle est utilisée pendant un processus WAAM, la surface imprimée se déplaçant par rapport à l'objet électriquement conducteur (601+604) ;
un premier connecteur (418), connecté électriquement à l'objet électriquement conducteur (601+604) configuré pour recevoir une connexion électrique à une source d'énergie (416, 409) ; et
un second connecteur (430, 603) configuré pour attacher l'objet électriquement conducteur (601+604)
à une tête d'imprimante (431, 501) qui, lorsqu'elle est utilisée pendant le processus WAAM, dépose un matériau pour former la surface imprimée.

2. Composant selon la revendication 1, dans lequel le premier connecteur est conçu pour recevoir une partie attachée à un câble de trajectoire de retour (415, 407, 504).

3. Composant selon la revendication 1 ou 2, dans lequel l'objet électriquement conducteur (601+604) comprend des poils (601, 701).

4. Composant selon l'une quelconque revendication précédente, dans lequel l'objet électriquement conducteur est configuré pour rouler sur la surface imprimée pendant le processus WAAM ;
ou dans lequel l'objet électriquement conducteur est configuré pour glisser sur la surface imprimée pendant le processus WAAM.

5. Composant selon l'une quelconque revendication précédente, comprenant en outre une charnière (506, 602) conçue pour connecter l'objet électriquement conducteur et le second connecteur ; dans lequel la charnière est à ressort.

6. Composant selon l'une quelconque revendication précédente, dans lequel le second connecteur est flexible pour permettre à l'objet électriquement conducteur de se déplacer sur des irrégularités dans la surface imprimée.

7. Composant selon l'une quelconque revendication précédente, comprenant en outre un élément motorisé qui déplace l'objet électriquement conducteur par rapport à la tête d'imprimante.

8. Composant selon l'une quelconque revendication précédente, dans lequel l'objet électriquement conducteur comprend un matériau électriquement conducteur choisi dans le groupe constitué de : un métal, un alliage métallique, un composite, un tissu, du carbone, et une combinaison de ceux-ci.

9. Système de fabrication additive par arc-fil (WAAM), comprenant :
une tête d'imprimante (431, 501) configurée pour déposer un matériau fondu pour former une partie (413, 403) ; et
le composant (503) selon l'une quelconque revendication précédente, dans lequel le second connecteur (430, 603) est configuré pour positionner l'objet électriquement conducteur (503) derrière un bord de refroidissement d'un bain de soudure sur la surface imprimée ou dans lequel le second connecteur est configuré pour positionner l'objet électriquement conducteur devant un bord de fusion d'un bain de soudure sur la surface imprimée.

10. Procédé de fabrication additive par arc-fil (WAAM) comprenant :
l'impression d'une partie (413, 403) avec une tête d'imprimante (431, 501) ;
l'établissement d'une trajectoire de retour entre une surface imprimée (412, 408, 502, 702) de la partie imprimée et une source d'énergie (416, 409) par l'intermédiaire d'un composant (503) ;
dans lequel le composant comprend :
un objet électriquement conducteur (601+604) configuré pour maintenir une connexion électrique continue par le biais d'un contact sensiblement constant avec la surface imprimée, la surface imprimée se déplaçant par rapport à l'objet électriquement conducteur (601+604) ;
un premier connecteur (418), connecté électriquement à l'objet électriquement conducteur, configuré pour recevoir une connexion électrique à la source d'énergie ; et
un second connecteur (430, 603) configuré pour attacher l'objet électriquement conducteur à la tête d'imprimante qui, lorsqu'elle est utilisée au cours d'un processus WAAM, dépose un matériau pour former la surface imprimée ; et le déplacement du composant le long de la surface imprimée.

11. Procédé selon la revendication 10, dans lequel le premier connecteur est configuré pour recevoir une partie attachée à un câble de trajectoire de retour (415, 407, 504).

12. Procédé selon la revendication 10 ou 11, dans lequel l'objet électriquement conducteur est configuré pour rouler sur la surface imprimée pendant le processus WAAM ;
ou dans lequel l'objet électriquement conducteur est configuré pour glisser sur la surface imprimée pendant le processus WAAM.

13. Procédé selon l'une quelconque des revendications 10 à 12, dans lequel le composant comprend en outre une charnière (506, 602) conçue pour connecter l'objet électriquement conducteur et le second connecteur ;
ou dans lequel le composant comprend en outre un élément motorisé qui déplace l'objet électriquement conducteur par rapport à la tête d'imprimante.

14. Procédé selon l'une quelconque des revendications 10 à 13, dans lequel le second connecteur est flexible pour permettre à l'objet électriquement conducteur de se déplacer par-dessus sur irrégularités dans la surface imprimée ;
ou dans lequel le second connecteur est configuré pour positionner l'objet électriquement conducteur derrière un bord de refroidissement d'un bain de soudure sur la surface imprimée ;
ou dans lequel le second connecteur est configuré pour positionner l'objet électriquement conducteur en avant d'un bord de fusion d'un bain de soudure sur la surface imprimée.

15. Procédé selon l'une quelconque des revendications 10 à 14, dans lequel l'impression se fait dans une orientation verticale ; ou dans lequel l'impression se fait dans une orientation horizontale.
